# EUROPEAN PATENT APPLICATION

(11) **EP 3 316 206 A1**
(43) Date of publication of application: **02.05.2018**
(21) Application number: 17198297.8
(22) Date of filing: 25.10.2017
(51) Int. Cl.: G06Q 40/02, G06Q 20/40, G06Q 20/10

(54) **SYSTEM, METHOD AND COMPUTER PROGRAM FOR SECURE CUSTOMER ACCOUNT OPENING**

(30) Priority: 31.10.2016 GB 201618335
(71) Applicant: IDscan Biometrics Limited, London E14 9QD (GB)
(72) Inventor: THOMPSON, Tamlyn, London, E14 9QD (GB)
(74) Representative: Armstrong, Rosemary

(57) **Abstract**

A system, method and computer program for secure customer account opening, e.g. for secure digital customer account opening.
An operator specifies a set comprising one or more types of identity documents and one or more types of commercial identity documents which the operator will accept as proof of identity or address of the identity document holder. A new customer submits an image of an ID document and a selfie. If the selfie matches an ID facial photo, personal details of the new customer are determined from the submitted ID image and an electronic identification and verification (eID&V) of the new customer is performed. If the eID&V step is successful, a new account is opened and the new customer is allowed to deposit funds. A unique identifier is transferred to the new customer, which may be used together with an image of an ID document or a commercial entity document to withdraw funds from the account.

## Description

### Field of the Invention

The present invention relates to a system, method and computer program for secure customer account opening; and more specifically, a system, method and computer program for secure digital customer account opening.

### Background of the Invention

In an increasingly, fast-paced and constantly switched-on world, the physical and opening/business hours constraints of conventional businesses, are becoming ever more out of step with the demands of today's tech-savvy customers. Customers are no longer content to travel to the 'brick and mortar' premises of an organisation and stand in queues waiting for attention. Rapid advances in mobile technology and its widespread adoption by society have brought about a seismic shift in customer behaviour and expectations. More specifically, in a transformation of the hitherto conventional customer-institutional relationship, customers expect institutions to use these new digital technologies to work in tune with customers' lives rather than demanding customers to adapt their lives to suit the operational processes of institutions.

To meet this demand, the banking and financial sector has spearheaded the evolution of mobile apps, video banking and new forms of payment. These technological advances were rapidly adopted by consumers. Indeed, latest industry figures show there were nearly 11 million logins a day to banking apps in 2015 - a 50% rise on the year before. Similarly, 11 m Banking app logins were made each day during 2015 - a 50% rise from2014. The boom in the use of digital banking channels has been accompanied by a sharp decline in the number of face to face interactions between banks and their customers. Indeed, an average of 71 branch visits were made per day in 2016 - a 32% fall since 2011 (The Way We Bank Now: Help at Hand, Summer 2016 Report, British Banker's Association).

The UK Home Office Identity Fraud Steering Committee defines identity fraud as "when a false identity or someone else's identity details are used to support unlawful activity, or when someone avoids obligation/liability by falsely claiming that he/she was the victim of identity fraud" (National Fraud Authority, Fraud Typologies and Victims of Fraud - Literature Review 2009). Identity crimes are one of the fastest growing types of fraud in the UK.

Facility Takeover Fraud, also known as Account Takeover Fraud, is an identity crime which occurs where a person (the facility hijacker) unlawfully obtains access to the details of their victim (namely an existing account holder or policy holder) and fraudulently operates the account or policy for his or her (or someone else's) benefit. In an effort to address this fraud, customers are required to provide increasing number of pieces of information to gain access to an account, particularly a bank account or credit card account (e.g. customer number; memorable date(s) or information; passwords; and one time codes from a card reader).

As taking over existing accounts has become more difficult, criminals have focused on using other people's identities to open new accounts. The UK's Fraud prevention service found that identity Fraud (using either stolen or fictitious identities) was the most commonly recorded type of fraud in 2014 and accounted for over 41% of all frauds identified. Indeed, the greatest increase in Identity Frauds, in terms of both the number of cases (23,686 cases in 2014 compared with 12,544 in 2013) and as a percentage (+89%), was where a fictitious or stolen identity was used to obtain bank accounts (Credit Industry Fraud Avoidance Service (CIFAS) Fraudscape: UK Fraud Trends 2014 Report).

With the decline in face-to-face customer onboarding, a reliable and effective mechanism of reducing identity fraud and providing secure customer onboarding is of paramount importance. However, any such mechanism must also be convenient and easy for customers to use. In particular, having grown accustomed to the ease of digital banking, customers will be naturally resistant to measures they believe to be overly burdensome. Thus, there is an intrinsic tension between the demands of making life difficult for a fraudster without overly inconveniencing legitimate customers.

### Summary of the Invention

According to the invention there is provided a secure customer account opening method comprising the steps of:
allowing an operator to specify a set comprising one or more types of identity documents and one or more types of commercial identity documents which the operator will accept as proof of identity or address of the identity document holder,
receiving an image of an identity document from a new customer, to form a submission ID image;
comparing the submission ID image with the specified identity document types or commercial identity document types,
allowing the new customer to submit a selfie in the event the submission ID image matches at least one of the one of the specified identity document types or commercial identity document types;
validating one or more security features in the submission ID image;
comparing the selfie with an ID facial photo in the submission ID image in the event the or each security features in the in the submission ID image are validated;
determining from the submission ID image one or more personal detail elements of the new customer;
performing electronic identification and verification (eID&V) of the new customer using the or each of the personal detail elements determined from the submission ID image;
opening a new account in the event the new customer passes electronic identification and verification and allowing the new customer to deposit funds into the new account;
generating a unique identifier number and communicating it to the physical address of the new customer;
receiving the unique identifier number from the new customer together with an item selected from the set comprising an image of a commercial identity document and the original physical commercial identity document;
validating the received unique identifier number and the or each of the received commercial identity document and the original physical commercial identity document;
allowing the new customer to withdraw funds from the new account in the event the received unique identifier number and the or each of the received commercial identity document and the original physical commercial identity document are validated.

Preferably, the step of receiving an image of an identity document from a new customer, to form a submission ID image comprises the steps of
notifying the new customer of the specified set of identity document types which the operator will accept as proof of identity
requesting the new customer to capture an image of an identity document which matches one of the accepted identity document types; and identifies the new customer as the identity document holder; and
requesting the new customer to transmit the image to an operator.

Preferably, the step of allowing the new customer to submit a selfie is preceded by the steps of
reminding the new customer of the specified set of identity document types which the operator will accept as proof of identity; and
requesting the new customer to transmit another image of an identity document which matches one of the accepted identity document types; and identifies the new customer as the identity document holder, and
in the event the submission ID image fails to match at least one of the one of the specified identity document types.

Desirably, the method comprises the further steps of
providing the new customer with a predefined number of opportunities to transmit further submission ID images for review; and
rejecting the new customer's application for the opening of a new account in the event the new customer exceeds the predefined number of opportunities without submitting a submission ID image which matches any one of the accepted identity document types.

Desirably, the steps of
generating a unique identifier number and communicating it to the physical address of the new customer;
receiving the unique identifier number from the new customer together with an item selected from the set comprising an image of a commercial identity document and the original physical commercial identity document;
validating the received unique identifier number and the or each of the received commercial identity document and the original physical commercial identity document; and
allowing the new customer to withdraw funds from the new account in the event the received unique identifier number and the or each of the received commercial identity document and the original physical commercial identity document are validated.
comprise the steps of generating a PIN number and communicating it to the physical address of the new customer;
allowing the new customer to enter the PIN number into an ATM or other PIN entry system
receiving and validating the received PIN number from the new customer and;
allowing the new customer to withdraw funds from the new account in the event the received PIN number is validated
and wherein the step of opening a new account in the event the new customer passes electronic identification and verification and allowing the new customer to deposit funds into the new account is preceded by the steps of
receiving from the new customer an image of a commercial identity document; and
validating the received commercial identity document;
and the step of opening a new account in the event the new customer passes electronic identification and verification comprises the step of opening a new account in the event the new customer passes electronic identification and verification and the received commercial identity document is validated.

According to a second aspect of the invention there is provided a secure customer account opening system comprising an image processing module, and a primary validation module, a selfie comparator and a secondary validation unit each of which is coupled with an account management module which is coupled in turn to a UID generator coupled to the secondary validation unit;
wherein the image processing module comprises an image comparator coupled with an image extractor and is adapted to receive a submission ID image of an identity document from a new customer, and the image comparator is adapted to compare the submission ID image with each member of an ID proof set of an operator; and to activate the image extractor in the event the submission ID image matches any of the members of the ID proof set; and wherein the image extractor is further coupled with the primary validation module and the selfie comparator and is adapted to employ image processing algorithms to extract from the submission ID image one or more security features of the identity document; one or more personal detail elements of the identity document holder; and to transmit both to the primary validation module; and to extract from the submission ID image an ID facial photo of the identity document holder; and to transmit it to the selfie comparator;
wherein the primary validation module comprises a document validation module and an eID&V module; and wherein the document validation module is adapted to validate the or each security features of the identity document, by comparing them with those of the member of the ID proof set that most closely matches the submission ID image; and wherein the eID&V module is adapted to perform an eID&V process on the identity document holder and wherein the or each of the document validation module and the eID&V module are adapted to transmit an activation signal to the account management module in the event the or each security features of the identity document is validated and the ID identity document holder passes the eID&V process;
wherein the selfie comparator comprises a plurality of face recognition algorithm units and is adapted to receive a selfie from the new customer and to activate the face recognition algorithm units to compare the selfie with the ID facial photo; and to transmit an activation signal to the account management module in the event the selfie and the ID facial photo match;
wherein the account management module is adapted on receipt of the or each activation signal from the document validation module and the eID&V module to open an account for the new customer and to permit the deposit of funds to the account; and to transmit an activation signal to the UID generator;
wherein the UID generator is adapted on receipt of an activation signal to generate a unique identification number UID and to communicate it to the new customer's physical address;
wherein the secondary validation unit is adapted to receive a code from the new customer and image or a physical original of a utility bill; to compare the image or the physical original of the utility bill with each member of a commercial identity proof set; to compare the received code with the UID generated by the UID generator; and to transmit an activation signal to the account management module in the event image or the physical original of the utility bill is matched with a member of the commercial identity proof set or the code is matched with the UID; and
wherein the account management module is adapted on receipt of an activation signal from the secondary validation unit to permit the new customer to withdraw funds from the account.

### Description and Drawings

An embodiment of the invention is herein described by way of example only, with reference to the accompanying drawings
Figure 1 is a flowchart of the secure customer account opening method of the first embodiment; and
Figure 2 is a block diagram of the secure customer account opening system of the second embodiment.

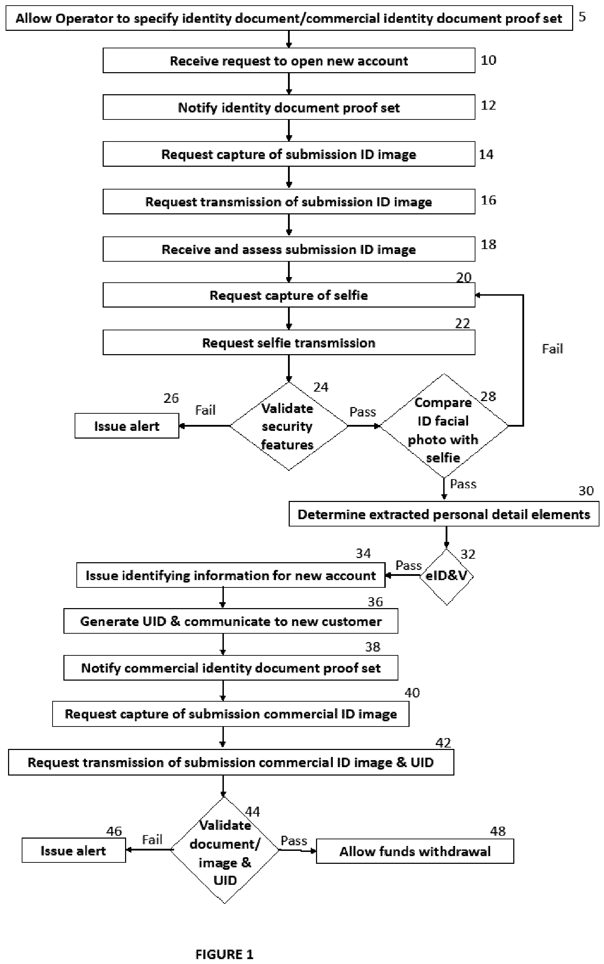

Referring to Figure 1, while certain specific features are illustrated, those skilled in the art will appreciate from the present disclosure that various other features have not been illustrated for the sake of brevity and so as not to obscure more pertinent aspects of the implementations disclosed herein. Similarly, for the sake of clarity, the term "identity" will be used henceforth to mean a collection of attributes that uniquely define a person (the fact of being what a person is). Similarly, the term "identity document" will be used henceforth to mean documentation provided by a person to support their claim to a specified identity. More specifically, the term identity document refers to documentation issued by a national or federal authority (e.g. security forces, intelligence agencies, border control/immigration agencies, welfare agencies) which certifies the identity of the person to whom the identity document is issued. The skilled person will understand that the preferred embodiment is not limited to documents issued by the above-mentioned authorities. In particular, the preferred embodiment is operable with documentation issued by any national or federal authority, which serves the purpose of certifying the identity of the person to whom the document is issued.

For brevity, the person to whom the identity document is issued will be referred to henceforth as the "identity document holder". Similarly, the authority which issued the identity document will be referred to henceforth as the "issuing authority" of the identity document. For clarity, an identity document will be understood to comprise a pictorial representation (i.e. a photo or a digital image) of the face of the identity document holder, to support facial recognition of that person. To this end, the term "face" will be used henceforth to refer to a human face. For brevity, the pictorial representation of the face of the identity document holder contained in the identity document will be referred to henceforth as the "ID facial photo".

In addition, an identity document typically comprises a number of visible features which may be used to assess the authenticity of the identity document. These features may include, without limitation, details of the issuing authority, the name/surname of the identity document holder, the nationality/city of residence of the identity document holder, a signature of the identity document holder, an issue date, a stamp of the issuing authority, an expiration date, an identity document number; and security features such as watermarks, intaglio printing, security patterns etc. In connection with the above, the term "personal detail element" will be used henceforth to refer to a piece of information such as date of birth, first name, last name, first line of address, which when combined with other personal detail elements could be used to identify or prove the identity of a person.

In a related manner, the term "commercial identity document" will be used henceforth to mean documentation issued by a commercial entity (e.g. utility company, bank/building society, insurance company) which typically includes physical address details of the person to whom it is issued; and which used together with an identity document, further certifies the identity of the person to whom the identity document and the commercial identity document is issued. For example, a commercial identity document may include without limitation a utility bill or statement; a bank or building society statement; or a house or motor insurance statement. The skilled person will understand that the preferred embodiment is not limited to documents issued by the above-mentioned commercial entities. In particular, the preferred embodiment is operable with documentation issued by any commercial entity, which serves the purpose of certifying the identity of the person to whom the document is issued. For clarity and consistency with previous terminology, the term "commercial identity document holder" will be used henceforth to refer to the person to whom the commercial identity document is issued

The secure customer account opening method of the first embodiment comprises a precursor step of allowing 5 an operator (not shown) to specify
(a) a set comprising one or more types of identity documents (e.g. UK driving licence, UK passport, UK Residency Permit etc.) which the operator will accept as proof of identity of the identity document holder; and
(b) a set comprising one or more types of commercial identity documents (e.g. statement from a specified utility supply company) which the operator will accept as proof of identity or address of the identity document holder.
For brevity, the set of one or more identity documents and will be referred to henceforth as the "identity document proof set". Similarly, the set of one or more commercial identity documents will be referred to henceforth as the "commercial identity document proof set".

Thereafter, the method comprises a first step of receiving 10 a request from a new customer (not shown) to open a new account for them. On receipt of the request, the method comprises of the next step of notifying 12 the new customer of the identity document proof set. The method comprises a further step of requesting 14 the new customer to capture an image of an identity document which matches one of the identity document types in the identity document proof set; and identifies the new customer as the identity document holder. For brevity, the image captured of the identity document will be referred to henceforth as a "submission ID image".

The method comprises the further step of requesting 16 the new customer to transmit the submission ID image to an operator for further consideration. Typically, this would comprise the step of requesting the new customer to upload the submission ID image to a specified server location provided by the operator. Alternatively, this step could include requesting the new customer to transmit the submission ID image to the operator by an encrypted email mechanism. The skilled person will understand that the preferred embodiment is in no way limited to these image transmission mechanisms. Indeed, the preferred embodiment is operable with any mechanism which allows the submission ID image to be securely transmitted by the new customer to the operator.

The method comprises the next step of receiving the submission ID image from the new customer and assessing 18 the submission ID image to determine whether the identity document appearing in the submission ID image matches any one of the identity document types specified in the identity document proof set. In the event the identity document does not match any of the identity document types in the identity document proof set, the method may comprise the step of reminding 12 the new customer of the identity document proof set; and requesting 14 the new customer to transmit another submission ID image. Optionally, the method may comprise the step of providing (not shown) the new customer with a predefined number of opportunities to transmit further submission ID images for review. In the event the new customer exceeds the predefined number of opportunities without submitting a submission ID image containing an identity document which matches with any of the identity document types in the identity document proof set, the method may comprise the further step (not shown) of rejecting the new customer's application for the opening of a new account and advising the new customer to re-apply later for a new account.

In the event the identity document in the submission ID image received from the new customer matches one of the identity document types in the identity document proof set, the method comprises the next step of requesting 20 the new customer to take a photograph of their own face. For the sake of brevity, the photograph of the new customer's face will be referred to henceforth as the new customer's "selfie". For example, the selfie could be captured by the new customer by means of a digital camera, a webcam or a mobile phone camera. The skilled person will understand that the preferred embodiment is not limited to the above selfie capture mechanisms. In particular, the preferred embodiment is operable with any mechanism by which a new customer might capture an image of their face.

The method comprises the next step of requesting 22 the new customer to transmit their selfie to the operator. The mechanism for transmission of the selfie may or may not be the same as that used for the transmission of the submission ID image. Optionally, in the interests of security, the step of requesting 22 the new customer to transmit their selfie to the operator may include the further step of providing (not shown) the new customer with a specified time interval within which to transmit the selfie to the operator. In the event the new customer fails to transmit the selfie to the operator within the specified time interval, the method may comprise the further step (not shown) of rejecting the new customer's request for the opening of a new account; and requesting the customer to re-apply later for a new account.

On receipt of the selfie from the new customer, the method may comprise the next step of assessing the received submission ID image; by identifying and validating 24 the security features of the identity document appearing in the received submission ID image. In the event the security features are not validated, the method may comprise the step of issuing 26 an alert and allowing the operator to formulate a response in accordance with the operator's fraud protocols.

In the event the security features are validated, the identity document may be deemed to be a valid identity document. Following this, the method may comprise the next step of comparing 28 the ID facial photo in the submission ID image received from the new customer with the selfie received from the new customer. In the event the ID facial photo fails to match the selfie, the method may comprise the step of requesting 20 the new customer to take another selfie and requesting 22 the new customer to transmit the other selfie to the operator and comparing 28 the ID facial photo in the submission ID image received from the new customer with the other selfie received from the new customer. Optionally, the method may comprise the step of providing (not shown) the new customer with a predefined number of opportunities to take and transmit further selfies for comparison with the ID facial photo in the submission ID image received from the new customer. In the event the new customer exceeds the predefined number of opportunities without achieving a match between any of their selfies and the ID facial photo in the submission ID image received from the new customer, the method may comprise the further step (not shown) of rejecting the new customer's application for the opening of a new account and advising the new customer to re-apply later for a new account.

In the event the ID facial photo in the submission ID image received from the new customer matches the selfie of the new customer, the new customer may be deemed to be the person identified in the valid identity document as the identity document holder. The next step is to prove the existence of the identity document holder. To this end, the method comprises the steps of performing (not shown) optical character recognition (OCR) on the submission ID image received from the new customer and determining 30 therefrom one or more personal detail elements of the identity document holder. For brevity, the one or more personal detail elements determined from the received image of the identity document will be referred to henceforth as "extracted personal detail elements".

The method comprises the next step of performing 32 electronic identification and verification (eID&V) on the person specified in the submission ID image as the identity document holder. eID&V may be performed by using the or each of the extracted personal detail elements to interrogate at least one database comprising information which may relate to the identity claimed by the new customer. These databases could include electoral roll, land registry, marriage index, credit rating. The skilled person will understand that the preferred embodiment is not limited to the use of these specific databases. In particular, the preferred embodiment is operable with any database which may include any information which may relate to the identity of an individual. The method may comprise the step of retrieving from the or each database one or more personal detail elements (which will be referred to henceforth as "validation personal detail elements") which may be used to cross-validate the extracted personal detail elements in addition to, or alternatively to cross-validating validation personal detail elements retrieved from other such databases.

In the event the identity document holder is deemed to have failed eID&V (e.g. the or each extracted personal detail element conflicts with the or each validation personal detail elements), the method comprises the step of allowing (not shown) the operator to formulate a response in accordance with its fraud protocols. By contrast, in the event the identity document holder is deemed to have passed the eID&V (e.g. the or each extracted personal detail element is validated by the or each validation personal detail elements), the method comprises the step of issuing 34 the new customer with identifying details (e.g sort code, account number etc.) for an account into which the customer may deposit funds or establish a standing order. However, the new customer is not permitted to withdraw or transfer funds deposited into the account.

Thereafter, the method comprises the further steps of generating 36 a unique identification number (UID) and communicating the UID to the identity document holder's physical (e.g. home) address (as expressed in the extracted personal detail elements and/or the personal detail elements retrieved during the eID&V process). For example, the UID could be communicated in a letter addressed to the new customer and mailed or couriered to the identity document holder's home address. The skilled person will understand that the preferred embodiment is not limited to written expression, nor is it limited to mailing or couriering of a written communication. In particular, the preferred embodiment is operable with any mechanism of communicating the UID to the identity document holder's physical address.

The method comprises the further step of notifying 38 the new customer of the commercial identity document proof set. The method comprises a further step of requesting 40 the new customer to capture an image of a document which matches one of the commercial identity document types specified in the commercial identity document proof set; and which identifies the new customer as the commercial identity document holder. For the sake of brevity, the image captured of the document will be referred to henceforth as the "submission commercial ID image". The method comprises the further step of requesting 42 the new customer to transmit to the operator the UID and the submission commercial ID image. The mechanism for transmission of the UID and the submission commercial ID image may or may not be the same as that used for the transmission of the submission ID image or the selfie. In particular, in addition to, or as an alternative to uploading the submission commercial ID image and UID to a specified server location provided by the operator, or emailing the submission commercial ID image and UID to an email address specified by the operator, the new customer may be requested to physically mail to the operator the physical original document which appears in the submission commercial ID image.

The method comprises the further step of validating 44 the UID and the submission commercial ID image and/or the physical original document which appears in the submission commercial ID image received from the new customer. In the case of the UID, the validation process comprises comparing (not shown) the UID received from the new customer with the UID previously communicated to the identity document holder's physical (e.g. home) address. Similarly, in the case of the physical original document, the validation process comprises checking (not shown) whether the received physical original document matches any of the commercial identity document types contained in the operator's commercial identity document proof set. In the event a match is found, the validation process comprises checking (not shown) features (e.g. layout, logo, sender's registered address details etc.) of the physical original document against those known for the matching commercial identity document type contained in the operator's commercial identity document proof set. In addition, the method may comprise the step of allowing (not shown) the operator to establish an allowed sending date range for the physical original document; and checking (not shown) whether the sending date of the physical original document (by its original issuer) is within the allowed sending date range. The skilled person will understand that the preferred embodiment is not restricted to checking the physical original document for those features specifically listed above. Instead, the preferred embodiment is operable to check for whatever features in the physical original document as required by the operator.

Furthermore, in the case of the submission commercial ID image, the method comprises the step of checking (not shown) whether the commercial identity document appearing in the received submission commercial ID image matches any of the commercial identity document types contained in the operator's commercial identity document proof set. In the event a match is found, the validation process comprises reviewing (not shown) the commercial identity document appearing in the submission commercial ID image, by performing OCR, graphical analysis and semantic reasoning etc. to compare features in the commercial identity document against those known for the matching commercial identity document type contained in the operator's commercial identity document proof set. The skilled person will understand that the preferred embodiment is not restricted to the above-mentioned mechanisms of checking the commercial identity document appearing in the submission commercial ID image. Instead, the preferred embodiment is operable to employ whichever mechanism(s) of checking the commercial identity document required by the operator. Similarly, the skilled person will understand that the preferred embodiment is not restricted to checking the commercial identity document appearing in the submission commercial ID image for those features specifically listed above. Instead, the preferred embodiment is operable to check for whatever features in the commercial identity document appearing in the submission commercial ID image as are required by the operator.

In the event any of the above steps are not passed, the new customer is deemed to have failed the validation step; and the method comprises the step of allowing 46 the operator to formulate a response in accordance with the operator's fraud protocols. Otherwise, the new customer is deemed to have passed the validation step; and the method comprises the step of allowing 48 the new customer to withdraw or transfer funds from their account.

In another embodiment, the steps of generating 36 a unique identification number (UID) and communicating the UID to the identity document holder's physical (e.g. home) address may be replaced with the step of issuing a PIN to the identity document holder's physical (e.g. home) address and allowing the identity document holder to enter the PIN into an ATM or other convention PIN entry system to allow the identity document holder to access the account to withdraw or transfer funds therefrom.

In this embodiment, the steps of notifying 38 the new customer of the commercial identity document proof set; requesting 40 the new customer to capture a submission commercial ID image; and requesting 42 the new customer to transmit to the operator the UID and the submission commercial ID image may be undertaken prior to the steps of communicating the PIN to the identity document holder's physical (e.g. home) address.

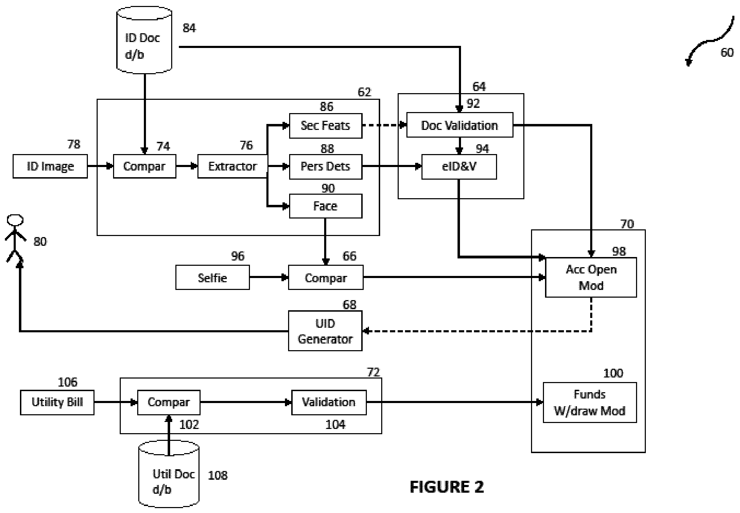

Referring to Figure 2, the secure customer account opening system 60 of the second embodiment comprises an image processing module 62, a primary validation module 64, a selfie comparator 66, a UID generator 68, an account management module 70 and a secondary validation unit 72.

The image processing module 62 is comprises an ID image receiver (not shown), an image comparator 74, and an image extractor 76. The ID image receiver is operably coupled with the image comparator 74; and is adapted in use to receive a submission ID image 78 from a new customer 80 and to transmit the received submission ID image 78 to the image comparator 74. The submission ID image 78 may be captured by means of an image capture device such as a webcam or a mobile phone camera, a scanner or a digital camera. Similarly, the submission ID image may be transmitted by the new customer 80 to the ID image receiver by means of an encrypted email or secure file transfer (SFTP) etc. However, the person skilled in the art will understand that the preferred embodiment is not limited to the above-mentioned mechanisms for capturing the submission ID image 78 or to the above-mentioned channels for the transmission of the submission ID image 78 to the ID image receiver. In particular, the skilled person will understand that the preferred embodiment is operable with any mechanism for capturing a digital representation of a presented identity document, as required by the operator. Similarly, the skilled person will understand that the preferred embodiment is operable with any channel for transmitting a digital representation of a presented identity document, as required by the operator.

The image comparator 74 is operably coupled with a first database 84 comprising the identity document proof set of the operator. The image comparator 74 is adapted in use to receive the submission ID image 78 from the ID image receiver and to interrogate the first database 84 to gain access to the members of the identity document proof set. More specifically, the image comparator 74 is adapted to compare the submission ID image 78 with each member of the identity document proof set and to determine whether the submission ID image 78 matches any of the members.

The image comparator 74 is further operably coupled with the image extractor 76. In the event the image comparator 74 identifies a match, between the submission ID image 78 and any member of the identity document proof set, the image comparator 74 is adapted to transmit the submission ID image 78 to the image extractor 76. The image extractor 76 is adapted to receive the submission ID image 78 from the image comparator 74 and to employ image processing algorithms to identify in the submission ID image 78 and extract therefrom:
- one or more security features 86 of the identity document;
- one or more personal detail elements 88 of the identity document holder; and
- the ID facial photo 90 of the identity document holder.

The image extractor 76 is further operably coupled with the primary validation module 64 and the selfie comparator 66. More specifically, the image extractor 76 is adapted to transmit to the primary validation module 64 the one or more security features 78 of the identity document; and the one or more personal detail elements 86 of the identity document holder. The primary validation module 64 comprises a document validation module 92 and an eID&V module 94.

The document validation module 92 is adapted in use to the receive the one or more security features 86 of the identity document. The document validation module 92 is operably coupled with the first database 84 to interrogate and receive therefrom the member of the identity document proof set that most closely matches the submission ID image 78 (as identified by the image comparator 74). For brevity, the member of the identity document proof set that most closely matches the submission ID image 78 will be referred to henceforth as the "matching reference ID document". The document validation module 92 is adapted in use to compare one or more of the security features of the matching reference ID document with those of the received one or more security features 86 of the identity document. On the basis of this comparison, the document validation module 92 is adapted to assess and validate the one or more security security features 86 of the identity document. The document validation module 92 is operably coupled with the account management module 70 and is adapted in use to transmit an activation signal to the account management module 70 in the event the one or more security security features 86 of the identity document are validated.

The eID&V module 94 is adapted to receive the one or more personal detail elements 88 of the identity document holder from the image extractor 76; and to use the received personal detail elements 88 to perform eID&V on the identity document holder. The eID&V module 94 is operably coupled with the account management module 70 and is adapted in use to transmit an activation signal to the account management module 70 in the event the identity document holder passes the eID&V process.

The selfie comparator 66 is adapted to receive a selfie 96 from the new customer 80 and to receive the ID facial photo 90 of the identity document holder (from the image extractor 76). The selfie comparator 66 comprises one or more facial recognition algorithms. The selfie comparator 66 is adapted to apply the or each facial recognition algorithms to the received selfie 96 and the ID facial photo 90 and determine a measure of the similarity therebetween to determine if the faces displayed in the received selfie 96 and the ID facial photo 90 match. The selfie comparator 66 is operably coupled with the account management module 70 and is adapted in use to transmit an activation signal to the account management module 70 in the event the received selfie 96 and the ID facial photo 90 are determined to match.

The account management module 70 comprises an account opening module 98 and a funds withdrawal module 100. The account opening module 98 is operably coupled with the document validation module 92; the eID&V module 94 and the selfie comparator 66. On receipt of an activation signal from the document validation module 92; the eID&V module 94 and the selfie comparator 66 the account opening module 98 is adapted to open an account for the new customer to permit the deposit of funds into the account and the establishment of a standing order from the account.

The account management module 70 is operably coupled with the UID generator 68 so that on opening of an account by the account opening module 98, the account management module 70 is adapted to transmit an activation signal to the UID generator 68. The UID generator 68 is adapted to receive the activation signal from the account management module 70 and on receipt thereof is adapted to generate a unique identification number (UID) and communicate it to the new customer's physical address.

The secondary validation unit 72 comprises a receiver unit (not shown), a comparator 102 and a validation module 104. The receiver unit is adapted to receive an image (or a physical original) of a utility bill 106 from the new customer 80; and is operably coupled with the comparator 102. The comparator 102 is coupled with a utility bill database 108 to interrogate the utility bill database 108 and gain access to the members of the commercial identity proof set. The comparator 102 is adapted to compare the image (or a physical original) of the utility bill 106 with each member of the utility bill database 108 and to determine whether the image (or a physical original) of the utility bill 106 matches any of the members. The comparator 102 is further operably adapted to the validation unit 104 to issue a first indication thereto in the event the image (or a physical original) of the utility bill 106 is determined to match a member of the commercial identity proof set.

The receiver unit (not shown) is adapted to receive a code (not shown) from the new customer 80 and to transmit the code to the comparator 102. The comparator 102 is adapted to compare the code with the unique identification number (UID) (generated by the UID generator 68 ) and to determine whether they match. The comparator 102 is further operably adapted to the validation unit 104 to issue a second indication thereto in the event the code is determined to match the unique identification number (UID).

The validation unit 104 is adapted to receive the first indication and the second indication from the comparator 102. The validation unit 104 is further operably coupled with the funds withdrawal module 100 on receipt of the first and second indication. The funds withdrawal module 100 is adapted to receive the activation signal and on receipt thereof to permit the new customer 80 to withdraw funds or transfer funds from their account.

Modifications and alterations may be made to the above without departing from the scope of the invention.

## Claims

1. A secure customer account opening method comprising the steps of:
allowing (5) an operator to specify a set comprising one or more types of identity documents and one or more types of commercial identity documents which the operator will accept as proof of identity or address of the identity document holder,
receiving (14,16) an image of an identity document from a new customer, to form a submission ID image;
comparing (18) the submission ID image with the specified identity document types or commercial identity document types,
allowing (20, 22) the new customer to submit a selfie in the event the submission ID image matches at least one of the one of the specified identity document types or commercial identity document types;
validating (24) one or more security features in the submission ID image;
comparing (28) the selfie with an ID facial photo in the submission ID image in the event the or each security features in the in the submission ID image are validated;
determining (30) from the submission ID image one or more personal detail elements of the new customer;
performing (32) electronic identification and verification (eID&V) of the new customer using the or each of the personal detail elements determined from the submission ID image;
opening (34) a new account in the event the new customer passes electronic identification and verification and allowing the new customer to deposit funds into the new account;
generating (36) a unique identifier number and communicating it to the physical address of the new customer;
receiving (40, 42) the unique identifier number from the new customer together with an item selected from the set comprising an image of a commercial identity document and the original physical commercial identity document;
validating (44) the received unique identifier number and the or each of the received commercial identity document and the original physical commercial identity document;
allowing (48) the new customer to withdraw funds from the new account in the event the received unique identifier number and the or each of the received commercial identity document and the original physical commercial identity document are validated.

2. The method of Claim 1 wherein the step of receiving (14,16) an image of an identity document from a new customer, to form a submission ID image comprises the steps of
notifying (12) the new customer of the specified set of identity document types which the operator will accept as proof of identity
requesting (14) the new customer to capture an image of an identity document which matches one of the accepted identity document types; and identifies the new customer as the identity document holder; and
requesting (16) the new customer to transmit the image to an operator.

3. The method of Claim 1 or Claim 2 wherein the step of allowing (20, 22) the new customer to submit a selfie is preceded by the steps of
reminding (12) the new customer of the specified set of identity document types which the operator will accept as proof of identity; and
requesting (14) the new customer to transmit another image of an identity document which matches one of the accepted identity document types; and identifies the new customer as the identity document holder, and
in the event the submission ID image fails to match at least one of the one of the specified identity document types.

4. The method of Claim 3 wherein the method comprises the further steps of
providing the new customer with a predefined number of opportunities to transmit further submission ID images for review; and
rejecting the new customer's application for the opening of a new account in the event the new customer exceeds the predefined number of opportunities without submitting a submission ID image which matches any one of the accepted identity document types.

5. The method of any one of the preceding Claims wherein the steps of
generating (36) a unique identifier number and communicating it to the physical address of the new customer;
receiving (40, 42) the unique identifier number from the new customer together with an item selected from the set comprising an image of a commercial identity document and the original physical commercial identity document;
validating (44) the received unique identifier number and the or each of the received commercial identity document and the original physical commercial identity document; and
allowing (48) the new customer to withdraw funds from the new account in the event the received unique identifier number and the or each of the received commercial identity document and the original physical commercial identity document are validated.
comprise the steps of generating a PIN number and communicating it to the physical address of the new customer;
allowing the new customer to enter the PIN number into an ATM or other PIN entry system
receiving and validating the received PIN number from the new customer and;
allowing the new customer to withdraw funds from the new account in the event the received PIN number is validated
and wherein the step of opening (34) a new account in the event the new customer passes electronic identification and verification and allowing the new customer to deposit funds into the new account is preceded by the steps of
receiving from the new customer an image of a commercial identity document; and
validating the received commercial identity document;
and the step of opening (34) a new account in the event the new customer passes electronic identification and verification comprises the step of opening a new account in the event the new customer passes electronic identification and verification and the received commercial identity document is validated.

6. A secure customer account opening system comprising an image processing module (62), and a primary validation module (64), a selfie comparator (66) and a secondary validation unit (72) each of which is coupled with an account management module (70) which is coupled in turn to a UID generator (68) coupled to the secondary validation unit (72)
wherein the image processing module (62) comprises an image comparator (74) coupled with an image extractor (76) and is adapted to receive a submission ID image (78) of an identity document from a new customer (80), and the image comparator (74) is adapted to compare the submission ID image (78) with each member of an ID proof set (84) of an operator; and to activate the image extractor (76) in the event the submission ID image matches any of the members of the ID proof set (84); and wherein the image extractor (76) is further coupled with the primary validation module (64) and the selfie comparator (66) and is adapted to employ image processing algorithms to extract from the submission ID image (78) one or more security features (86) of the identity document; one or more personal detail elements (88) of the identity document holder; and to transmit both to the primary validation module (64); and to extract from the submission ID image (78) an ID facial photo (90) of the identity document holder; and to transmit it to the selfie comparator (66);
wherein the primary validation module (64) comprises a document validation module (92) and an eID&V module (94); and wherein the document validation module (92) is adapted to validate the or each security features (86) of the identity document, by comparing them with those of the member of the ID proof set (84) that most closely matches the submission ID image; and wherein the eID&V module (94) is adapted to perform an eID&V process on the identity document holder and wherein the or each of the document validation module (92) and the eID&V module (94) are adapted to transmit an activation signal to the account management module (70) in the event the or each security features (86) of the identity document is validated and the ID identity document holder passes the eID&V process;
wherein the selfie comparator (66) comprises a plurality of face recognition algorithm units and is adapted to receive a selfie from the new customer (80) and to activate the face recognition algorithm units to compare the selfie with the ID facial photo (90); and to transmit an activation signal to the account management module (70) in the event the selfie and the ID facial photo (90) match;
wherein the account management module (70) is adapted on receipt of the or each activation signal from the document validation module (92) and the eID&V module (94) to open an account for the new customer and to permit the deposit of funds to the account; and to transmit an activation signal to the UID generator (68);
wherein the UID generator (68) is adapted on receipt of an activation signal to generate a unique identification number UID and to communicate it to the new customer's physical address;
wherein the secondary validation unit (72) is adapted to receive a code from the new customer and image or a physical original of a utility bill; to compare the image or the physical original of the utility bill with each member of a commercial identity proof set; to compare the received code with the UID generated by the UID generator (68); and to transmit an activation signal to the account management module (70) in the event image or the physical original of the utility bill is matched with a member of the commercial identity proof set or the code is matched with the UID; and
wherein the account management module (70) is adapted on receipt of an activation signal from the secondary validation unit (72) to permit the new customer to withdraw funds from the account.

7. A secure customer account opening computer program, tangibly embodied on a computer readable medium, the computer program product including instructions for causing a computer to execute the secure customer account opening method as claimed in Claim 1.

8. The secure customer account opening method substantially as described and illustrated in the accompanying drawings.
